# EUROPEAN PATENT SPECIFICATION

(11) **EP 3 967 565 B1**
(45) Date of publication and mention of the grant of the patent: **28.09.2022**
(21) Application number: 20195941.8
(22) Date of filing: 14.09.2020
(51) Int. Cl.: B60W 40/064, B60W 40/068, B60T 8/176, G06N 20/00

(54) **METHODS AND APPARATUSES FOR ESTIMATING AN ENVIRONMENTAL CONDITION**
VERFAHREN UND VORRICHTUNGEN ZUR ABSCHÄTZUNG EINES UMGEBUNGSZUSTANDES
PROCÉDÉS ET APPAREILS POUR ESTIMER UNE CONDITION ENVIRONNEMENTALE

(43) Date of publication of application: 16.03.2022
(73) Proprietor: Bayerische Motoren Werke Aktiengesellschaft, 80809 München (DE); Tactile Mobility, 3303323 Haifa (IL)
(72) Inventor: BONFIGT, Martin, 82299 Türkenfeld (DE); ALBRECHT, Rico, 80933 München (DE); MIZRACHI, Boaz, 32546 Haifa (IL)
(74) Representative: 2SPL Patentanwälte PartG mbB

(56) References cited:
- DE-A1-102017 214 053
- DE-A1-102018 008 287
- US-A1- 2020 238 999

## Description

### Field

The present invention generally relates to machine learning (ML) and, more particularly, to validating machine learning based estimates of environmental conditions in safety-sensitive fields, such as autonomous driving, for example.

### Background

Autonomous vehicles are starting to become a real possibility in parts of industry. Many of the operations that vehicles have to perform are based on sensor information and some artificial intelligence (AI) algorithms, which are also referred to as machine learning (ML) algorithms throughout this specification. The number of sensors with real time sensor data and the need for intelligent processing of the sensor data and or feature vectors derived therefrom can be overwhelming. AI may be used in the central unit as well as in multiple electronic control units (ECU) of modern automobiles. An example of a vehicle using sensors and machine learning (ML) algorithms for determining one or more anomalies of a navigable surface (e.g., road) is described in US 2020/0238999 AI.

There may be numerous sensors providing data for a central computer of the vehicle during operation. Sensors may provide environmental information on the road, weather, other vehicles as well as any other impediments that can be noticed similarly to how a human can perceive them. Some of these sensors can provide better environmental perception than the average human, but for this to happen smart algorithms are needed that can make sense of the data streams generated in real time.

One task of AI- or machine learning networks used in vehicles may be to provide estimates of current environmental conditions, such as weather or road conditions, for example an estimate for grip between tires and road. Artificial neural networks (ANN) may be the algorithms used for this task. Another term for this is deep learning because a neural network contains many layers that contain many nodes. For this purpose of road condition estimation, data from tire sensors, torque sensors, weather sensors (e.g., humidity sensors, temperature sensors, etc.), damper sensors, and so on, may be input to a trained machine learning network implementing an AI-algorithm. Based on this input data from the sensors, the trained machine learning network may output an estimate of a road condition (e.g., "very slippery", "slightly slippery", or "not slippery").

However, machine learning networks do not provide deterministically accurate information. Therefore, a machine learning network must be secured if it is to be used for quasi-deterministic or deterministic statements in safety-sensitive applications. This may require a large number of verification tests. The deeper the test depth and learning density of a machine learning network, the lower the risk of inaccurate or false statements. A complete test depth is, however, technically hardly achievable in reality. An internal vehicle test fleet is not appropriate because the required amount of data is simply too large to be covered by a small test fleet.

Thus, particularly in the safety-sensitive field of autonomous driving, there is a need for verification and validation of machine learning based estimates.

### Summary

This objective is addressed by apparatuses and methods in accordance with the independent claims. Further advantageous embodiments are addressed by the dependent claims.

Embodiments of the present invention propose a post qualification/disqualification of estimates of a machine learning network for environmental condition estimation during operation.

According to a first aspect of the present invention, it is provided an apparatus for estimating an environmental condition. The apparatus comprises an input interface configured to receive input data derived from one or more sensors. Each sensor is configured to measure a physical quantity related to a vehicle or its environment. The input data features or represents the vehicle's current driving situation or driving status. The apparatus further comprises a machine learning processor which is configured to map the input data featuring the vehicle's current driving status to an estimated environmental condition. The apparatus further comprises a validation processor configured to validate (or least partly invalidate) the estimated environmental condition of the machine learning processor based on a measurement of the environmental condition in the vehicle's current driving status. The measurement of the environmental condition is of higher confidence (higher trust level) than the estimated environmental condition of the machine learning processor. Therefore, the measurement of the environmental condition will also be referred to as "ground truth measurement" in the present invention.

In other words, the validation processor is configured to confirm or disconfirm the estimated environmental condition using a ground truth measurement of the actual environmental condition. In some embodiments, the environmental condition may be a condition which cannot easily be directly measured during driving. For example, the environmental condition may be a road condition, such as friction between vehicle and road or grip of a road. Further examples of environmental conditions are weather conditions or conditions of other nearby objects. The one or more sensors might not be configured to measure the estimated environmental condition directly. For this reason, the machine learning based estimation may be used.

In some embodiments, the (ground truth) measurement is a measurement performed concurrently or subsequently to estimating the environmental condition. Estimating the environmental condition is done using the machine learning (ML) processor. The (ground truth) measurement may be performed separately or independently of the machine learning based estimation using dedicated sensor/measurement circuitry. Thus, the measurement is not a ground truth measurement used for training the machine learning processor, but it is a measurement which is used to verify whether the machine learning based environmental condition estimate fits a measured actual environmental condition or not.

In some embodiments, the apparatus further comprises measurement circuitry which is configured to perform the (ground truth) measurement during the vehicle's current driving status and/or upon a sudden change of the vehicle's current driving status initiated by the vehicle's driver. Thus, the measurement of the actual environmental condition could be performed concurrently with the machine learning based environmental condition estimation. In some embodiments, the measurement could be a continuous measurement of the actual environmental condition. In some embodiments, the measurement could be a one-time measurement of the actual environmental condition. The measurement of the actual environmental condition could also be initiated, during vehicle's current driving status, by a sudden action of the driver, such as a sudden brake or acceleration maneuver, for example. Thus, in some embodiments, the measurement may be a (one-time) driver-initiated measurement of the actual environmental condition (e.g., road condition).

In some embodiments, the measurement circuitry comprises at least one sensor to determine measurement data related to a friction (grip) between the vehicle and a road. For example, the measurement circuitry may comprise at least one of an Anti-lock Braking System (ABS) sensor, a Traction Control System (TCS) sensor, and a fifth wheel sensor to determine measurement data related to the road condition. These types of sensors allow a direct measurement of a road's actual grip level which can then be compared to an estimated grip level (estimated environmental/road condition) output from the machine learning processor.

In some embodiments, the validation processor is configured to validate/invalidate the estimated environmental condition based on a comparison of a result of the (ground truth) measurement with the machine learning based environmental condition estimate. For example, the measurement may be mapped to a corresponding measured environmental condition which may then be compared with the machine learning based environmental condition estimate. Only in case of a match at least within certain limits, the machine learning based environmental condition estimate may be validated (confirmed). Otherwise, it may be invalidated.

In some embodiments, the validation processor is configured to signal, based on a comparison of a result of the (ground truth) measurement with the machine learning based environmental condition estimate, a measure of (in)accuracy of the estimated environmental condition. The measure of (in)accuracy may comprise a confidence level, for example.

In some embodiments, wherein the validation processor may be configured to signal an invalidation of the estimated road condition if a difference between a result of the (ground truth) measurement and the machine learning based environmental condition estimate exceeds a predefined threshold. For example, the measurement may be mapped to a corresponding measured environmental condition which may then be compared with the machine learning based environmental condition estimate. If they do not match (within certain limits), the estimated environmental condition may be invalidated.

In some embodiments, an invalidation may override previous and/or subsequent validations of a machine learning based environmental condition estimate based on input data featuring the same driving status. Note that a certain event may be defined by a certain set of input data (featuring a certain driving status) leading to a corresponding machine learning based environmental condition estimate. Thus, once an event has been invalidated, this invalidation may overwrite previous and/or subsequent validations of the event since the corresponding environmental condition estimate may not considered trustworthy anymore. For autonomous driving applications only trustworthy (confirmed) estimates should be used.

The apparatus further comprises communication circuitry configured to communicate validation information regarding an outcome of the validation of the machine learning based environmental condition estimate between the apparatus and an external entity. In some embodiments, the validation information may be indicative whether nor not the machine learning based environmental condition estimate has been validated by the (ground truth) measurement between the apparatus and an external entity. For example, the communication processor may comprise wireless communication processor. The external entity may be a cloud server, for example. In this way, a vehicle may communicate its validation/invalidation results to a central cloud server. The cloud server may receive validation/invalidation results from a plurality of or all vehicles of a vehicle fleet employing the proposed concept and may thus administer and feedback the validation/invalidation results from the vehicle fleet.

In some embodiments, the communication circuitry is configured to receive update information related to one or more machine learning based environmental condition estimates from an external entity (e.g., central cloud server). In particular, the communication circuitry may be configured to receive, for one or more possible combinations of a featured driving status and a machine learning based environmental condition estimate (the combinations also referred to as events), update information from the external entity. The update information may indicate that the one or more events have previously been validated or invalidated by previous (ground truth) measurements related to the one or more events. The previous (ground truth) measurement(s) may have been performed by the vehicle or at least another (similar) vehicle of the vehicle fleet. Thus, a cloud server may send update information based on the validation/invalidation results from the whole vehicle fleet to individual vehicles. In this way, one vehicle of the fleet may benefit from the validation/invalidation result(s) provided by another vehicle of the fleet. Thus, swarm knowledge of the whole fleet can be used in every car to validate/invalidate machine learning based environmental condition estimates.

In some embodiments, the apparatus further comprises memory for storing the update information. This may be done in form of a Look-up-Table (LUT), for example. The LUT may indicate, for each tuple of input data vector and corresponding environmental condition estimate (the tuple may also be referred to as event), whether this event has been validated or not. Thus, the LUT may map different machine learning based environmental condition estimates to respective different featured driving statuses (or vice versa) and indicate whether an event (tuple of a featured driving status and a machine learning based environmental condition estimate) has been validated by a previous (ground truth) measurement related to said event. As described previously, the previous (ground truth) measurement may have been performed by the vehicle or at least another similar vehicle of the vehicle fleet.

In some embodiments, the validation processor is configured to validate the machine learning based environmental condition estimate based on information indicating that the machine learning based environmental condition estimate has previously been validated by a previous (ground truth) measurement related to the vehicle's current driving status, wherein the previous (ground truth) measurement was performed by the vehicle or at least another similar vehicle of a vehicle fleet. For example, if the above-mentioned LUT indicates that a current machine learning based environmental condition estimate has been validated by (ground truth) measurements of at least a minimum number of vehicles in the fleet, the vehicle may trust the machine learning based environmental condition estimate without further own (ground truth) measurement. This may be beneficial if no own (ground truth) measurement is possible for a current driving status, for example. In alternative implementations, the vehicle may always perform an own (ground truth) measurement to validate its current machine learning based environmental condition estimate.

In some embodiments, the validation processor is configured to forward the machine learning based environmental condition estimate to a control unit (e.g., ECU) of the vehicle only if the machine learning based environmental condition estimate has been validated (confirmed). Additionally or alternatively, the validation processor is configured to indicate an invalidated machine learning based environmental condition estimate to a control unit (e.g., ECU) of the vehicle to prevent the control unit from using the invalidated machine learning based environmental condition estimate for controlling the vehicle (e.g., related to autonomous driving).

In some embodiments, the machine learning based environmental condition estimate (e.g., road condition estimate) comprises an estimated friction or grip level indicative of a grip between the vehicle and a road.

According to a further aspect of the present invention, it is provided a vehicle comprising the apparatus for estimating the environmental condition according to any one of the previous embodiments. The vehicle can be configured for at least partial autonomous driving.

According to yet a further aspect of the present invention, it is provided a cloud server. The cloud server comprises a communication interface which is configured to receive, from one or more vehicles of a vehicle fleet, different validation information units related to different instances of a same combination of a featured driving situation and a machine learning based environmental condition estimate generated by a machine learning processor. The cloud server further comprises processing circuitry configured to determine a validity attribute of the combination of the featured driving situation and the machine learning based environmental condition estimate, based on the different validation information units.

In some embodiments, the validity attribute may comprise a confidence level of the machine learning based environmental condition estimate given the featured driving situation. In some embodiments, the validity attribute may comprise a validation/invalidation of the machine learning based environmental condition estimate given the featured driving situation.

In some embodiments, the communication interface may be configured to receive first validation information related to a combination (tuple) of a featured driving situation and a machine learning based environmental condition estimate generated by a machine learning processor of a first vehicle, and to receive second validation information related to the same combination of the featured driving situation and a machine learning based environmental condition estimate generated by a machine learning processor of a second vehicle. The processing circuitry may be configured to compare the first and the second validation information and to invalidate the machine learning based environmental condition estimate for said featured driving status for all vehicles of the vehicle fleet, if at least one of the first and the second validation information indicates an invalidated machine learning based environmental condition estimate.

In some embodiments, the communication interface may be an interface to a cellular communications network. Thus, the cloud server may be configured to communicate with vehicles of a vehicle fleet.

In some embodiments, the communication interface is configured to transmit, for one or more combinations (tuples) of a featured driving status and a corresponding machine learning based environmental condition estimate, update information to one or more vehicles of the vehicle fleet, the update information indicating a respective validity attribute of the more combinations of the featured driving situation and the machine learning based environmental condition. For example, the update information may indicate that the corresponding machine learning based environmental condition estimate has previously been validated or invalidated by a previous (ground truth) measurement related to the featured driving status, wherein the previous (ground truth) measurement was performed one or more vehicles of the vehicle fleet. Thus, the vehicles may update their validation/invalidation LUTs based on the update information from the cloud server.

According to yet a further aspect of the present invention, it is provided a method for estimating an environmental condition. The method includes deriving input feature data based on one or more sensors, wherein each sensor is configured to measure a physical quantity related to a vehicle or its environment, wherein the input feature data features the vehicle's current driving status. The method further includes estimating, using a machine learning model, an environmental condition based on the input feature data. The method further includes validating the estimated environmental condition based on one or more measurements of the environmental condition obtained at the vehicle's current driving status. The one or more measurements of the environmental condition are of higher confidence (higher trust level) than the estimated environmental condition of the machine learning model. The environmental condition may be a road condition, for example. The machine learning model may be implemented by a machine learning processor in hardware and/or software.

In some embodiments, deriving the input feature data comprises mapping raw sensor data to a feature space by extracting characteristic features of the vehicle's current driving status from the raw sensor data. This may be done using a dedicated machine learning (feature) network for feature extraction, for example. The machine learning network may be a part of the machine learning processor or may be external to the machine learning.

In some embodiments, the measurement is performed independently of the machine learning model during the vehicle's current driving status and/or upon a sudden change of the vehicle's current driving status initiated by the vehicle's driver. In both cases one deals with the vehicle's current driving status - in once case the current driving status was preceded by a sudden change - in another case the current situation was not preceded by a sudden change - in which the vehicle is in steady state.

In some embodiments, the measurement is performed using one or more ABS sensors during an ABS breaking maneuver of the vehicle.

In some embodiments, validating the machine learning based environmental condition estimate comprises comparing a result of the measurement to the environmental condition estimated by the machine learning model.

In some embodiments, the machine learning based environmental condition estimate is validated if the result of the measurement fits the environmental condition estimated by the machine learning model, and wherein the estimated environmental condition is invalidated if the result of the measurement does not fit the environmental condition estimated by the machine learning model.

In some embodiments, the method further includes communicating information on whether nor not the machine learning based environmental condition estimate has been validated by the measurement between the vehicle and an external server.

In some embodiments, validating the machine learning based environmental condition estimate is based on information indicating whether the machine learning based environmental condition estimate, given the input feature data, has previously been validated or invalidated by a previous measurement related to the vehicle's current driving status, wherein the previous measurement was performed by the vehicle or at least another similar vehicle.

According to yet a further aspect of the present invention, it is provided a method for a cloud server. The method includes receiving, from one or more vehicles of a vehicle fleet, different validation information units related to different instances of a same combination of a featured driving situation and a machine learning based environmental condition estimate generated by a machine learning processor. The method further includes determining a validity attribute of the combination of the featured driving situation and the machine learning based environmental condition estimate, based on the different validation information units.

In some embodiments, the method may include receiving, from a first vehicle of a vehicle fleet, first validation information related to a combination of a featured driving status and machine learning based environmental condition estimate, and receiving, from the first or a second vehicle of the vehicle fleet, second validation information related to the same combination of the featured driving status and the machine learning based environmental condition estimate. The method further includes comparing the first and the second validation information and invalidating the machine learning based environmental condition estimate for said featured driving status for all vehicles of the vehicle fleet, if at least one of the first and the second validation information indicates an invalidated machine learning based environmental condition estimate.

In some embodiments, the method further includes transmitting, for one or more combinations of a featured driving status and a corresponding machine learning based environmental condition estimate, update information to one or more vehicles of the vehicle fleet, the update information indicating a respective validity attribute of the one or more combinations of the featured driving situation and the machine learning based environmental condition estimate. For example, the update information may indicate that the corresponding machine learning based environmental condition estimate has previously been validated or invalidated by a previous measurement related to the featured driving status, wherein the previous measurement was performed one or more vehicles of the vehicle fleet.

According to yet a further aspect of the present invention, it is also provided a computer program for carrying out any one of the previous methods, when the computer program is executed on a programmable hardware device and/or stored in a non-transitory computer readable medium.

Embodiments of the present invention allow a post-qualification of the machine learning algorithm during operation - by a customer fleet itself. Thus, the necessary large number of tests can be carried out easily and cost-effectively.

### Brief description of the Figures

Some examples of apparatuses and/or methods will be described in the following by way of example only, and with reference to the accompanying figures, in which
- Fig. 1: shows an apparatus for estimating a road condition and its validation/invalidation in accordance with an embodiment of the present invention;
- Fig. 2: shows a system for estimating a road condition in accordance with an embodiment of the present invention, the system comprising a vehicle fleet and a cloud server;
- Fig. 3: shows a cloud server in accordance with an embodiment of the present invention;
- Fig. 4A: shows a flowchart of a method of validating a machine learning based road condition estimate in accordance with an embodiment of the present invention; and
- Fig. 4B: shows a flowchart of a method for a cloud server in accordance with an embodiment of the present invention.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Although the following detailed description focusses on a machine learning based estimation of a road condition, the skilled person having benefit from the present invention will appreciate that the proposed concept of a-posteriori validating/invalidating a machine learning based estimate using ground truth measurements can be also employed for other than machine learning based road condition estimates.

Measuring vehicles with friction value measurement technology are known for direct active friction value measurement in special situations, e.g. determination of airfield friction values. Examples are the so-called Surface Friction Tester and the so-called Sideway-force Coefficient Routine Investigation Machine. Both are based on force measurement. The Surface Friction Tester is a vehicle trailer with three wheels. The third wheel is braked to the physical limit, until the tire stops. The friction force can be determined via the braking force or the braking torque required for this purpose and the coefficient of friction can be determined using the known normal force. The Sideway-force Coefficient Routine Investigation Machine can determine the friction force via the lateral force of a fifth wheel, which is inclined at 20 degrees to the direction of travel. The coefficient of friction can again be determined with known normal force. However, in passenger cars and similar vehicles, there are usually no dedicated friction coefficient sensors installed. Therefore, machine learning based estimation approaches may be employed.

For example, it is possible to determine or estimate a friction coefficient for road sections by server-side processing of many sensor data from many different vehicles, e.g. acceleration sensors, in combination with weather sensors and road-side sensors, e.g. slipperiness sensors. Such information about the friction coefficient can then be used for further functional development with the aim of increasing safety and comfort. Road friction coefficients, entered in a friction coefficient map, can be used, for example, to automatically set vehicle speeds, e.g. in front of curves. In this way, dangerous situations or accidents can be avoided by leaving the lane, especially in difficult road conditions such as wetness or snow.

Developments in the field of connected vehicles enable, for example, the exchange of sensor data on the current roadway, speed, traffic situation, etc. by means of so-called connectivity units. By processing such data and gaining information about road sections, highly automated driving and predictive driver assistance systems can be operated with a gain in safety. In particular, a vehicle can be provided with information about an environment that could not be generated by the vehicle alone with its own sensor technology.

In some embodiments of the present invention, vehicles of a vehicle fleet may each be equipped with various environmental sensors and one or more machine learning (ML) processor to generate a machine learning based road condition estimate, e.g., a friction coefficient or a grip level for a road, based on sensor data of the environmental sensors and/or based on more abstract features derived thereof. The question of whether the machine learning based road condition estimate is trustworthy may be safety-critical in the context of autonomous driving applications. A machine learning based road condition estimate not matching an actual road condition may have fatal consequences. For example, consider a situation where the machine learning based road condition estimate indicates a high friction when there is actual a low friction or grip between the vehicle and the road. Since the machine learning based road condition estimate may act as a basis for further autonomous driving control actions taken by an ECU of the vehicle, such a wrong estimate may be fatal. Therefore, the present invention addresses the problem of deciding whether a machine learning based road condition estimate generated by a machine learning processor is trustworthy or not and thus may or may not be used for further control mechanisms of a vehicle. This is referred to a validation (or qualification) of the machine learning based road condition estimate.

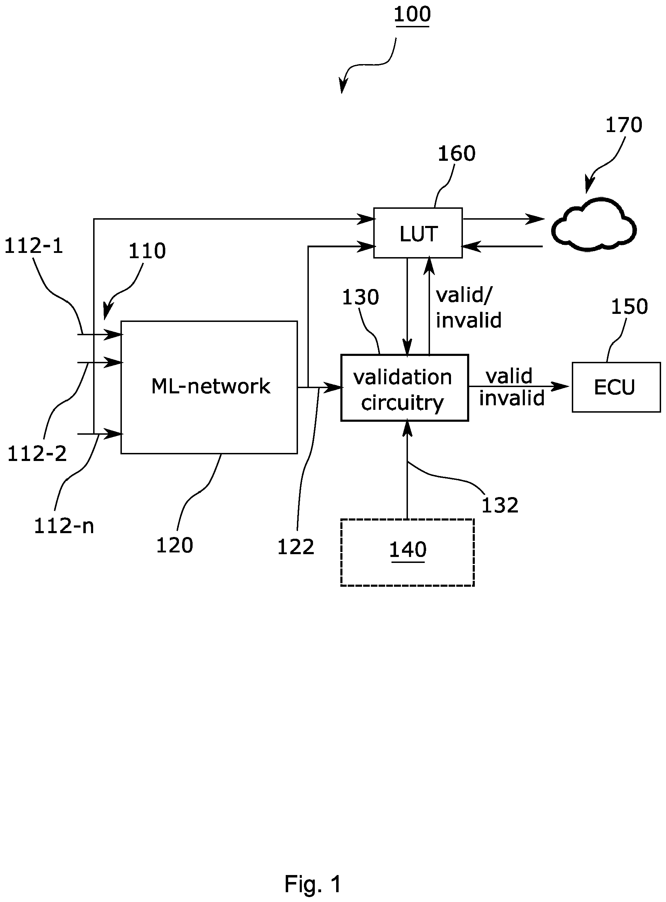

Fig. 1 shows an apparatus 100 for estimating a road condition in accordance with an embodiment of the present invention. The person having benefit from the present invention will appreciate that instead of a road condition also other environmental conditions may be estimated. Therefore, embodiments of the present invention are not limited to road conditions but can be employed, mutatis mutandis, for other environmental conditions as well.

The apparatus 100 comprises an input interface 110 which is configured to receive input data 112 derived from one or more sensors (not shown). Each of the sensors is configured to measure a physical quantity related to a vehicle or its environment (surrounding). That is to say, the input data 112 can comprise raw sensor data and/or data generated by processing the raw sensor data - for example the so-called feature vectors generated from raw sensor data. Such feature vectors may be obtained by using functions to map raw sensor data to features. In some implementations, one or more feature networks extracting features from raw sensor data may be used. A feature network may be a machine learning network configured to extract certain features from raw sensor data, for example. The input data 112 features the vehicle's current driving situation/status. That is, the input data 112 derived from the sensors may represent the vehicle's current driving status on a road.

The input data 112 may represent status data obtained from one or more environment sensors of the vehicle, one or more infrastructure sensors for the surrounding area and additionally or alternatively one or more driving data sensors of the vehicle. Thus, sensor signals representing environmental data for the surrounding area, infrastructure data for the surrounding area and additionally or alternatively driving data of the vehicle can be processed. The environmental data can represent measured values from at least one environmental sensor, such as weather data, in particular temperature, rain, snow, humidity, air pressure, solar radiation, etc., and additionally or alternatively environmental data from a vehicle-internal environmental sensor system, such as a camera, radar, thermal image, lidar, etc.

The infrastructure data can represent measured values from at least one infrastructure sensor, in particular data collected by road sensors, such as temperature of a road surface, humidity on a road surface, number of vehicles, etc. The driving data can represent measured values of at least one driving data sensor, such as inertial sensors, odometry, slip detection, sensors of a steering system and additionally or alternatively of an assistance system of at least one vehicle etc. Such a design offers the advantage that a wide range of possibilities for the acquisition of condition data can be exploited.

The input or status data 112 is fed into a machine learning processor 120 which is configured to map the input data 112 indicative of the vehicle's current driving status to an estimated road condition 122. Machine learning processor 120 implements a machine learning model by software and/or by hardware (analog and/or digital processor). The estimated road condition 122 may also be referred to as machine learning based road condition estimate. Machine learning processor 120 implements a machine learning model which translates the input data 112 (representing the vehicle's current driving status) to an estimate for a current road condition. For example, the input data 112 may be classified into one of a plurality of road conditions (for example, not slippery, slightly slippery, slippery, very slippery). Note that the one or more sensors might not be able to measure the current road condition directly. Therefore, the current road condition is estimated indirectly by machine learning processor 120.

Machine learning processor 120 may comprise a trained machine learning network, such as a neural network for example. Embodiments of the present invention are not limited to specific implementations of machine learning processor 120. Various machine learning networks or artificial intelligence networks are known and may be selected according to the specific implementation and the available input data 112. One example of machine learning processor which may be used is a recurrent neural network, in particular a Long Short-Term Memory (LSTM) recurrent neural network (RNN).

Machine learning networks do not provide deterministically accurate information. Therefore, a machine learning network must be secured if it is to be used for quasi-deterministic or deterministic statements. The present invention proposes, to feed the machine learning based road condition estimate 122 output from machine learning processor 120 to a validation processor 130 as a first input thereof. A second input 132 of validation processor 130 may be data 132 from a measurement related to the vehicle's current driving status. Thus, the measurement is obtained at or in the same driving status which is featured by the input data 112. Since the measurement has a higher trust level (confidence) than the machine learning based road condition estimate 122, it will also be referred to as ground truth measurement. The measurement may have a higher trust level because it may be provided from a more reliable sensor, it may be provided under controlled conditions, it may be provided from situations that once measured may provide more trusted measurements than other situations. For example - a situation in which an ABS system is activated may provide a reliable (even when indirect) measurement of a grip of a road section. The ground truth measurement can be performed concurrently or subsequently to determining the machine learning based road condition estimate 122. The ground truth measurement may or may not serve as training data for adjusting model parameters of the machine learning processor 120 (also commonly referred to as training). In any case, the measurement may be used for verifying as to whether the machine learning based road condition estimate 122 matches an actual road condition - but it may also indicate the confidence level (or a relative accuracy) of the estimate of the actual road condition. The ground truth measurement serves for post-qualification of the machine learning model implemented by machine learning processor 120.

For this purpose, apparatus 100 may further comprise measurement circuitry 140 which is configured to perform the ground truth measurement during the vehicle's current driving situation (featured by the input data 112) that may be a substantially steady state situation (that does not involve drastic changes of the vehicle's driving status) and/or perform the ground truth measurement upon a sudden change of the vehicle's current driving status initiated by the vehicle's driver, such as a sudden brake or acceleration maneuver. For example, measurement circuitry 140 may comprise the previously mentioned surface friction tester which may be used for a ground truth measurement of the friction/grip between the vehicle and the road during the vehicle's current driving status. However, in practical scenarios passenger cars might not have a dedicated vehicle trailer for that purpose. Therefore, measurement circuitry 140 may comprise at least one of an Antilock Breaking System (ABS)-sensor or Traction Control System (TCS) sensor. In this case, a current machine learning based road condition estimate 122 may be verified by sensor data from an ABS-sensor or a TCS-sensor. ABS sensor data may be obtained when the vehicle's driver suddenly initiates an ABS brake, for example. TCS sensor data may be obtained when the vehicle's driver suddenly accelerates, for example. Such obtained ground truth measurement data may then be put in relation to the latest machine learning based road condition estimate 122 in order to judge whether the machine learning based road condition estimate 122 makes sense or is reliable.

The measurement circuitry 140 may be regarded as a reference system that can determine the road condition (e.g. coefficient of friction) independently of the machine learning algorithm implemented in machine learning processor 120, e.g. a situation-identical or situation-similar measurement of the maximum traction capacity using ABS braking, an external reference source (so-called "5th wheel" or similar) or another virtual reference sensor. This reference value can be used to verify the machine learning based road condition estimate 122 of machine learning processor 120.

The validation processor 130 may signal an invalidation of the machine learning based road condition estimate 122 if a difference between the ground truth measurement data 132 and the machine learning based road condition estimate 122 exceeds a predefined threshold. That is, the machine learning based road condition estimate 122 may be invalidated if the ground truth measurement data 132 does not match the machine learning based road condition estimate 122. This can happen if a situation/road condition cannot be differentiated sufficiently well by the machine learning algorithm. There may be vehicles that recognize a verification and other vehicles that mark the same situation as falsification. For example, the machine learning algorithm may have been trained on cobblestones and ice slabs on roads may be so similar that they are falsely recognized as cobblestones. On the other hand, validation processor 130 may validate the machine learning based road condition estimate 122 if the ground truth measurement data 132 does match the machine learning based road condition estimate 122. In some embodiments, an invalidation of a machine learning based road condition estimate 122 may supersede previous and/or subsequent validations of the machine learning based road condition estimate generated based on input data 112 featuring the same or at least a similar driving status/situation.

The validation processor 130 may be configured to indicate an invalidated machine learning based road condition estimate to a control unit 150 of the vehicle in order to prevent the control unit 150 from using the machine learning based road condition estimate 122 for further controlling the vehicle. This means that a machine learning based road condition estimate 122 will not be used by the vehicle if it has been invalidated by the related ground truth measurement. This can help to avoid false or even fatal control commands based on wrong machine learning based road condition estimates. On the other hand, a validated machine learning based road condition estimate 122 may be forwarded to the control unit 150 for further processing.

Additionally, or alternatively, validation processor 130 may determine and signal a confidence level of the machine learning based road condition estimate 122. Thus, validation processor 130 may also provide a soft decision - a measure of accuracy - not just VALID/NON-VALID. There may me more than 2, 10, 20, 50, 100, 500, 1000 and even more different accuracy levels and/or grades.

Validation results may be stored in any data structure. For example - in a Look-Up Table (LUT) 160. For this purpose, LUT 160 may be indicative of possible input-output tuples, i.e., possible tuples of driving status (e.g., represented by input vectors 112) and output estimates 122. LUT 160 may indicate for each of said possible tuple of driving status (or input vector 112) and output estimates 122 a respective measure of accuracy and/or whether the respective estimate 122 has been validated by a ground truth measurement or not. If LUT 160 indicates an invalidated machine learning based road condition estimate 122, the estimate 122 might not be used for further controlling the vehicle.

One or more inaccurate or invalidated machine learning based road condition estimates may indicate a need for adapting the machine learning model of machine learning processor 120. The machine learning model may be adapted by further training the machine learning processor 120 for driving situations/statuses for which the machine learning processor 120 generated wrong estimates 122. In such a case, the ground truth measurement 132 may be used as training data for training the machine learning processor 120 with the aim to produce a better (correct) machine learning based road condition estimate 122 based on the same input data 112 featuring the driving status in question. For that purpose, a cost function between the ground truth measurement 132 and the machine learning based road condition estimate 122 may be minimized or otherwise set to a predefined value. Additionally or alternatively, machine learning processor 120 may also be modified by providing more differentiated input data 112 and/or using a different machine learning model which better fits the driving situations/statuses for which the machine learning processor 120 had generated wrong estimates. In some embodiments, the machine learning processor 120 may be updated by software-update, for example. Thus, the machine learning processors 120 of a vehicle fleet may be updated by software-update.

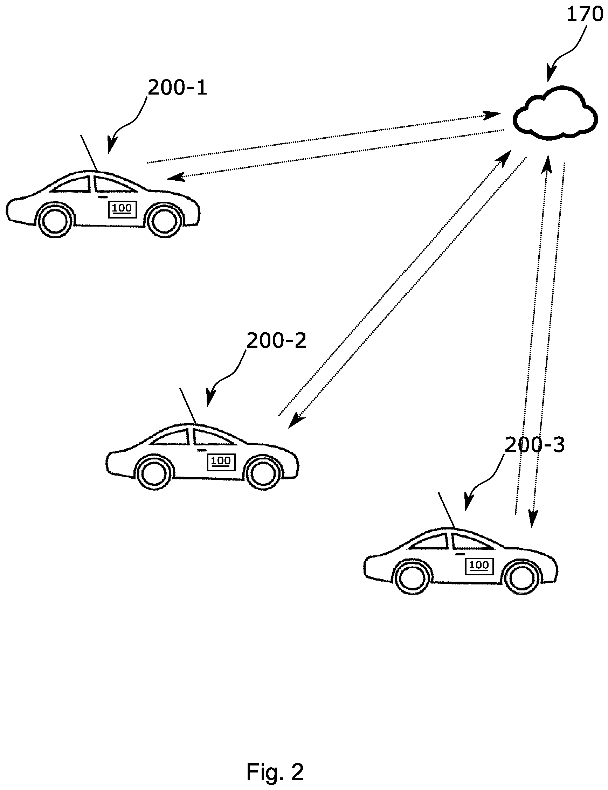

As illustrated in Fig. 2, the apparatus 100 including the machine learning processor 120, validation processor 130, measurement circuitry 140, ECU 150, and LUT 160 may be implemented in a vehicle 200. Thus, the vehicle 200 may be used to estimate a current road condition using machine learning processor 120 and to validate the machine learning based road condition estimate 122 using LUT 160 and/or measurement circuitry 140. For example, the validation processor 130 may be configured to validate (invalidate) the machine learning based road condition estimate 122 based on information stored in the LUT 160 indicating that the machine learning based road condition estimate 122 has previously been validated (invalidated) by a previous ground truth measurement related to the vehicle's current driving situation/status. The previous ground truth measurement may have been performed by the vehicle itself or by other vehicles of a vehicle fleet.

The skilled person having benefit from the present invention will appreciate that the apparatus 100 or parts thereof may also be implemented on a central server remote from a vehicle. In such embodiments, the apparatus 100 may process data received from one or more vehicles to generate the machine learning based road condition estimates and the validations/invalidations thereof. Validated road condition estimates may then be fed back to the respective vehicles for further processing.

If embodiments of the apparatus 100 are implemented in a plurality of vehicles of a vehicle fleet, swarm knowledge may be used to identify weak spots of the underlying machine learning model used for estimating the respective road condition. If the machine learning based road condition estimation and the validation/invalidation process described before is performed in each vehicle 200-1, 200-2, 200-3 of the fleet and the validation/invalidation results are provided to an external entity (e.g. a cloud-based backend server) 170, validation/invalidation results of the whole fleet may be administered, updated and fed back to the individual vehicles 200-1, 200-2, 200-3.

For this purpose, the apparatus 100 comprises communication circuitry (not shown) configured to communicate, between the apparatus 100 (or the vehicle) and an external entity 170 (such as a cloud server), validation information regarding an outcome of a validation of the machine learning based road condition estimate. For example, communication circuitry may communicate information on whether nor not the machine learning based road condition estimate 122 has been validated by the ground truth measurement 132. This may be done for each vehicle 200-1, 200-2, 200-3. The cloud server 170 may be provided by a car manufacturer, for example. In some implementations, each vehicle 200-1, 200-2, 200-3 may be equipped with transceiver processor for wireless communications based on cellular communication technologies, such as 4G, 5G, or future generation cellular communication standards.

The cloud server 170 may receive such validation/invalidation information from each vehicle of the vehicle fleet 200-1, 200-2, 200-3 and be configured to combine the individual validation/invalidation information from each vehicle 200-1, 200-2, 200-3 to an overall validation/invalidation matrix for the fleet. This can be done, for example, by logically combining (such as logically ORing or any other function) individual validation/invalidation matrices coming from the individual vehicles. The individual validation/invalidation matrices may be stored in the respective LUTs, for example.

Validation/invalidation information of an event (defined by a featured driving status and corresponding estimated road condition) may be stored in a suitable qualification matrix in the backend 170 (the data is sent to the backend where a generally valid qualification matrix is created including all vehicles). A single vehicle communicates to the backend 170 if it can confirm a new event. In the next step, all vehicles 200-1, 200-2, 200-3 of the fleet may receive the updated qualification matrix from the backend 170. The update can be a complete update or a delta update. Since this communication is done for each vehicle, it is possible that each vehicle contributes only a small part to the qualification matrix. The entire qualification matrix may therefore be created by including the entire customer fleet in the driving operation.

A vehicle's communication circuitry may be configured to receive update information for an event from the backend 170. The update information may indicate that the event (featured driving status and corresponding estimated road condition) has previously been validated or invalidated by a previous ground truth measurement related to the event. The previous ground truth measurement may have been performed by the vehicle itself or at least another similar vehicle of a vehicle fleet. The update information may be communicated whenever there is a change in the overall validation/invalidation matrix.

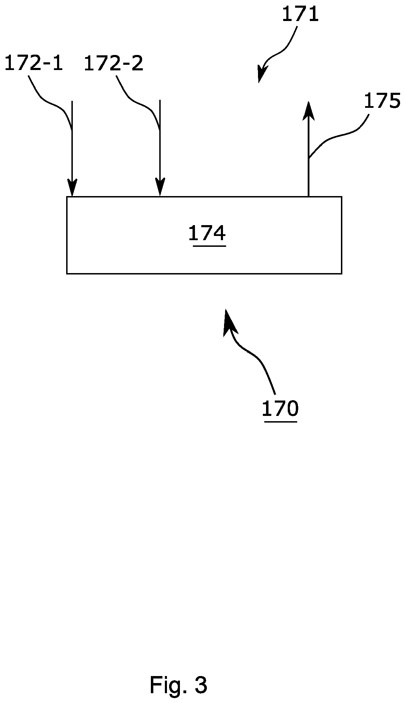

**Fig.** 3 illustrates an embodiment of a cloud server 170 in accordance with an embodiment of the present invention. Cloud server is merely an example of a computerized system that is not located within a vehicle. The computerized system may be located in environments other than a cloud environment, it may include one or more servers, one or more desktops, may be located within a data center, outside a data center, and the like.

The cloud server 170 comprises a communication interface 171 configured to receive, from one or more vehicles 200-1, 200-2, 200-3 of a vehicle fleet, different validation information units related to different instances of a same event. An event may be regarded as a combination of a featured driving situation and a machine learning based road condition estimate generated by a machine learning circuitry. Cloud server 170 further comprises processing circuitry 174 configured to determine a validity attribute of the event based on the different validation information units. The validity attribute can comprise a soft decision, such as a confidence level, or a hard decision, such as valid/non-valid.

The communication interface 171 may be configured to receive, from a first vehicle 200-1 of a vehicle fleet or a memory of the cloud server 170, first validation information 172-1 (e.g. a first validation/invalidation matrix) related to an event (featured driving status and corresponding estimated road condition), and to receive, from the first vehicle 200-1 or a second vehicle 200-2, 200-3 of the vehicle fleet, second validation information 172-2 (e.g. a second validation/invalidation matrix) comprising or related to essentially the same event. In some embodiments, either the first or the second validation information may already be stored in a memory of the cloud server 170, e.g. in form of the previously mentioned qualification matrix.

The processor 174 may be configured to compare the first and the second validation information 172-1, 172-2 and to invalidate the estimated road condition for said featured driving status for all vehicles of the vehicle fleet, if at least one of the first and the second validation information 172-1, 172-2 indicates an invalidated estimated road condition. This means, if one vehicle of the vehicle fleet has invalidated (disqualified) an estimated road condition for a featured driving status, the event may be invalidated (disqualified) for all vehicles of the fleet or at least for all vehicles of the same or similar type. Other disqualification rules may be applied. For example a majority vote. Yet for another example instead of disqualifying - the level of confidence may be changed.

It should be noted that validation related decision made by a certain vehicle may affect the qualification made by any vehicle of a car fleet, by only vehicles that are similar to the vehicle, by vehicles that have similar vehicle system (for example similar breaking systems), by v vehicles that are not similar to the vehicle, and the like.

For this purpose, the communication interface 171 may be configured to transmit, for one or more events (of a featured driving status and a corresponding estimated road condition), update information (e.g. updated qualification matrix) 175 to one or more vehicles of the vehicle fleet. The update information 175 can be a complete update or a delta update and may be written to the LUT 160 of each vehicle. The update information 175 may comprise respective validity attributes for one or more events (of a featured driving status and a corresponding estimated road condition). For example, a validity attribute may comprise a confidence level of the machine learning based environmental condition estimate given the featured driving situation. Additionally, or alternatively, the validity attribute may comprise a validation/invalidation of the machine learning based environmental condition estimate given the featured driving situation. Thus, the update information may indicate that the corresponding estimated road condition has previously been validated or invalidated by a previous ground truth measurement related to the featured driving status. The previous ground truth measurement may have been performed by one or more vehicles of the vehicle fleet.

Thus, the cloud server 170 may recognize a "need for updates" on the basis of a LUT or two LUTs and may recognize, compress and communicate the update difference quantity of the LUTs via a mechanism (e.g. a communication bidirectional channel between car and cloud).

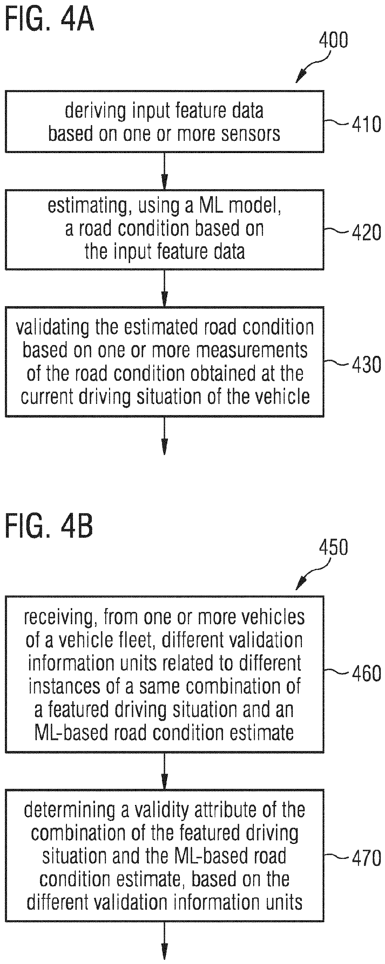

**Fig. 4A and 4B** summarize aspects of the present invention by illustrating respective flowcharts of methods.

Fig. 4A shows a flowchart of a method 400 of validating a machine learning based road condition estimate. Method 400 includes deriving 410 input feature data based on one or more sensors, wherein each sensor is configured to measure a physical quantity related to a vehicle or its environment, wherein the input data features a current driving situation of the vehicle. Method 400 further includes estimating 420, using a machine learning model, a road condition based on the input feature data. Method 400 further includes validating 430 the estimated road condition based on one or more measurements of the road condition obtained at the current driving situation of the vehicle.

Fig. 4B shows a flowchart of a method 450 for a cloud server. Method 450 includes receiving 460, from one or more vehicles of a vehicle fleet, different validation information units related to different instances of a same combination of a featured driving situation and a machine learning based road condition estimate. Method 450 further includes determining 470 a validity attribute of the combination the featured driving situation and the machine learning based road condition estimate, based on the different validation information units.

Embodiments may allow for an efficient qualification/disqualification of machine learning based estimates across an entire vehicle fleet.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. An apparatus (100) for estimating a road condition, comprising
an input interface (110) configured to receive input data (112) derived from one or more sensors, wherein each sensor is configured to measure a physical quantity related to a vehicle (200) or its environment, wherein the input data (112) features a current driving status of the vehicle;
a machine learning processor (120) configured to map the input data (112) to an estimated road condition (122);
a validation processor (130) configured to validate the estimated road condition (122) based on a measurement (132) of the road condition obtained at the current driving status of the vehicle; and
**characterized by** further comprising a communication circuitry configured to communicate validation information regarding an outcome of the validation of the estimated road condition (122) between the apparatus (100) and an external entity (170).

2. The apparatus (100) of claim 1, comprising measurement circuitry (140) configured to perform the measurement concurrently or subsequently to determining the estimated road condition by the machine learning processor (120).

3. The apparatus (100) of claim 1 or 2, comprising measurement circuitry (140) configured to perform the measurement during the vehicle's current driving status and/or upon a sudden change of the vehicle's current driving status initiated by the vehicle's driver.

4. The apparatus (100) of claim 3, wherein the measurement circuitry (140) comprises at least one sensor to determine ground truth data related to a grip between the vehicle (200) and a road.

5. The apparatus (100) of claim 3 or 4, wherein the measurement circuitry (140) comprises at least one of an anti-lock braking system, an ABS sensor, a traction control system (TCS) sensor, and a fifth wheel sensor to determine ground truth data related to the road condition.

6. The apparatus (100) of any one of the previous claims, wherein the validation processor (130) is configured to validate the estimated road condition based on a comparison of a result of the measurement (132) with the estimated road condition (122).

7. The apparatus (100) of any one of the previous claims, wherein the validation processor (130) is configured to signal, based on a comparison of a result of the measurement (132) with the estimated road condition (122), a measure of accuracy of the estimated road condition (122).

8. The apparatus (100) of any one of the previous claims, wherein the validation processor (130) is configured to signal an invalidation of the estimated road condition (122) if a difference between a result of the measurement (132) and the estimated road condition (122) exceeds a predefined threshold.

9. The apparatus (100) of any one of the previous claims, comprising communication circuitry configured to receive, for a tuple of a featured driving status and an estimated road condition (122), update information (175) from an external entity (170), the update information (175) indicating that the estimated road condition has previously been validated or invalidated by a previous measurement related to the featured driving status, wherein the previous measurement was performed by the vehicle or at least another vehicle of a vehicle fleet.

10. The apparatus (100) of claim 9, wherein the validation processor (130) is configured to validate or invalidate the estimated road condition (122) based on the update information (175).

11. The apparatus (100) of any one of the previous claims, wherein the validation processor (130) is configured to forward the estimated road condition (122) to a control unit (150) of the vehicle only if the estimated road condition has been validated.

12. The apparatus (100) of any one of the previous claims, wherein the estimated road condition (122) comprises an estimated grip level indicative of a grip between the vehicle and a road.

13. A cloud server (170), comprising
a communication interface (171) configured to
receive, from one or more vehicles (200-1; 200-2; 200-3) of a vehicle fleet, different validation information units related to different instances of a same tuple of a featured driving status and an estimated road condition generated by a machine learning processor (120); and
a processing circuitry (174) configured to
determine a validity attribute of the tuple of the featured driving status and the estimated road condition, based on the different validation information units.

14. The cloud server (170) of claim 13, wherein the communication interface (171) is configured to
receive, from a first vehicle of a vehicle fleet, first validation information (172-1) related to a tuple of a featured driving status and an estimated road condition, and
receive, from the first or a second vehicle of the vehicle fleet, second validation information (172-2) related to the same tuple of the featured driving status and the estimated road condition; and
the processing circuitry (174) is configured to
compare the first and the second validation information; and
invalidate the estimated road condition for said featured driving status for all vehicles of the vehicle fleet, if at least one of the first and the second validation information indicates an invalidated estimated road condition.

15. A method (400) of validating a machine learning based road condition estimate, the method comprising
deriving (410) input feature data from one or more sensors, each sensor measuring a physical quantity related to a vehicle (200) or its environment, wherein the input feature data (112) features a current driving status of the vehicle;
estimating (420), using a machine learning model (120), a road condition (122) based on the input feature data;
validating (430) the estimated road condition (122) based on a measurement (132) of the road condition obtained at the current driving status of the vehicle; and
**characterized by** further comprising communicating validation information regarding an outcome of the validation of the estimated road condition (122) between the vehicle (200) and an external entity (170).

## Patentansprüche

1. Eine Vorrichtung (100) zum Schätzen eines Straßenzustands, umfassend
eine Eingangsschnittstelle (110), die ausgebildet ist, Eingangsdaten (112) zu empfangen, die von einem oder mehreren Sensoren hergeleitet werden, wobei jeder Sensor ausgebildet ist, eine physikalische Größe zu messen, die sich auf ein Fahrzeug (200) oder seine Umgebung bezieht, wobei die Eingangsdaten (112) einen aktuellen Fahrstatus des Fahrzeugs aufweisen;
einen Maschinelles-Lernen-Prozessor (120), der ausgebildet ist, die Eingangsdaten (112) auf einen geschätzten Straßenzustand (122) abzubilden;
einen Validierungsprozessor (130), der ausgebildet ist, den geschätzten Straßenzustand (122) basierend auf einer Messung (132) des Straßenzustands zu validieren, die bei dem aktuellen Fahrstatus des Fahrzeugs erhalten wird; und
**gekennzeichnet durch** weiteres Umfassen einer
Kommunikationsschaltungsanordnung, die ausgebildet ist, Validierungsinformationen bezüglich eines Ergebnisses der Validierung des geschätzten Straßenzustands (122) zwischen der Vorrichtung (100) und einer externen Entität (170) zu kommunizieren.

2. Die Vorrichtung (100) gemäß Anspruch 1, umfassend eine Messschaltungsanordnung (140), die ausgebildet ist, die Messung gleichzeitig oder anschließend an die Bestimmung des geschätzten Straßenzustands durch den Maschinelles-Lernen-Prozessor (120) auszuführen.

3. Die Vorrichtung (100) gemäß Anspruch 1 oder 2, umfassend eine Messschaltungsanordnung (140), die ausgebildet ist, die Messung während des aktuellen Fahrstatus des Fahrzeugs und/oder bei einer plötzlichen Änderung des aktuellen Fahrstatus des Fahrzeugs, die durch den Fahrer des Fahrzeugs initiiert wird, auszuführen.

4. Die Vorrichtung (100) gemäß Anspruch 3, wobei die Messschaltungsanordnung (140) zumindest einen Sensor umfasst, um Ground-Truth-Daten zu bestimmen, die sich auf eine Haftung zwischen dem Fahrzeug (200) und einer Straße beziehen.

5. Die Vorrichtung (100) gemäß Anspruch 3 oder 4, wobei die Messschaltungsanordnung (140) zumindest eines von einem Antiblockiersystem, einem ABS-Sensor, einem Antriebsschlupfregelung- (TCS) Sensor und einem Sattelkupplungssensor umfasst, um Ground-Truth-Daten zu bestimmen, die sich auf den Straßenzustand beziehen.

6. Die Vorrichtung (100) gemäß einem der vorangehenden Ansprüche, wobei der Validierungsprozessor (130) ausgebildet ist, den geschätzten Straßenzustand basierend auf einem Vergleich eines Ergebnisses der Messung (132) mit dem geschätzten Straßenzustand (122) zu validieren.

7. Die Vorrichtung (100) gemäß einem der vorangehenden Ansprüche, wobei der Validierungsprozessor (130) ausgebildet ist, basierend auf einem Vergleich eines Ergebnisses der Messung (132) mit dem geschätzten Straßenzustand (122) ein Maß der Genauigkeit des geschätzten Straßenzustands (122) zu signalisieren.

8. Die Vorrichtung (100) gemäß einem der vorangehenden Ansprüche, wobei der Validierungsprozessor (130) ausgebildet ist, eine Invalidierung des geschätzten Straßenzustands (122) zu signalisieren, wenn eine Differenz zwischen einem Ergebnis der Messung (132) und dem geschätzten Straßenzustand (122) eine vordefinierte Schwelle überschreitet.

9. Die Vorrichtung (100) gemäß einem der vorangehenden Ansprüche, umfassend eine Kommunikationsschaltungsanordnung, die ausgebildet ist, für ein Tupel eines aufgewiesenen Fahrstatus und eines geschätzten Straßenzustands (122) Aktualisierungsinformationen (175) von einer externen Entität (170) zu empfangen, wobei die Aktualisierungsinformationen (175) anzeigen, dass der geschätzte Straßenzustand zuvor durch eine vorherige Messung, die sich auf den aufgewiesenen Fahrstatus bezieht, validiert oder invalidiert wurde, wobei die vorherige Messung durch das Fahrzeug oder zumindest ein anderes Fahrzeug einer Fahrzeugflotte ausgeführt wurde.

10. Die Vorrichtung (100) gemäß Anspruch 9, wobei der Validierungsprozessor (130) ausgebildet ist, den geschätzten Straßenzustand (122) basierend auf den Aktualisierungsinformationen (175) zu validieren oder zu invalidieren.

11. Die Vorrichtung (100) gemäß einem der vorangehenden Ansprüche, wobei der Validierungsprozessor (130) ausgebildet ist, den geschätzten Straßenzustand (122) nur an eine Steuereinheit (150) des Fahrzeugs weiterzuleiten, wenn der geschätzte Straßenzustand validiert wurde.

12. Die Vorrichtung (100) gemäß einem der vorangehenden Ansprüche, wobei der geschätzte Straßenzustand (122) einen geschätzten Haftungsgrad umfasst, der eine Haftung zwischen dem Fahrzeug und einer Straße anzeigt.

13. Ein Cloud-Server (170), umfassend
eine Kommunikationsschnittstelle (171), die ausgebildet ist zum
Empfangen, von einem oder mehreren Fahrzeugen (200-1; 200-2; 200-3) einer Fahrzeugflotte, unterschiedlicher Validierungsinformationseinheiten, die sich auf verschiedene Instanzen eines selben Tupels eines aufgewiesenen Fahrstatus und eines geschätzten Straßenzustands beziehen, das von einem Maschinelles-Lernen-Prozessor (120) erzeugt wird; und
eine Verarbeitungsschaltungsanordnung (174), die ausgebildet ist zum
Bestimmen eines Gültigkeitsattributs des Tupels des aufgewiesenen Fahrstatus und des geschätzten Straßenzustands basierend auf den verschiedenen Validierungsinformationseinheiten.

14. Der Cloud-Server (170) gemäß Anspruch 13, wobei die Kommunikationsschnittstelle (171) ausgebildet ist zum
Empfangen, von einem ersten Fahrzeug einer Fahrzeugflotte, von ersten Validierungsinformationen (172-1), die sich auf ein Tupel eines aufgewiesenen Fahrstatus und eines geschätzten Straßenzustands beziehen, und
Empfangen, von dem ersten oder einem zweiten Fahrzeug der Fahrzeugflotte, von zweiten Validierungsinformationen (172-2), die sich auf dasselbe Tupel des aufgewiesenen Fahrstatus und des geschätzten Straßenzustands beziehen; und
wobei die Verarbeitungsschaltungsanordnung (174) ausgebildet ist zum
Vergleichen der ersten und der zweiten Validierungsinformationen; und
Invalidieren des geschätzten Straßenzustands für den aufgewiesenen Fahrstatus für alle Fahrzeuge der Fahrzeugflotte, wenn zumindest eine von den ersten und den zweiten Validierungsinformationen einen invalidierten geschätzten Straßenzustand anzeigt.

15. Ein Verfahren (400) zum Validieren einer auf maschinellem Lernen basierenden Straßenzustandsschätzung, das Verfahren umfassend
Herleiten (410) von Eingangsmerkmalsdaten von einem oder mehreren Sensoren, wobei jeder Sensor eine physikalische Größe misst, die sich auf ein Fahrzeug (200) oder seine Umgebung bezieht, wobei die Eingangsmerkmalsdaten (112) einen aktuellen Fahrstatus des Fahrzeugs aufweisen;
Schätzen (420), unter Verwendung eines Maschinelles-Lernen-Modells (120), eines Straßenzustands (122) basierend auf den Eingangsmerkmalsdaten;
Validieren (430) des geschätzten Straßenzustands (122) basierend auf einer Messung (132) des Straßenzustands, die bei dem aktuellen Fahrstatus des Fahrzeugs erhalten wird; und
**gekennzeichnet durch** weiteres Umfassen von
Kommunizieren von Validierungsinformationen bezüglich eines Ergebnisses der Validierung des geschätzten Straßenzustands (122) zwischen dem Fahrzeug (200) und einer externen Entität (170).

## Revendications

1. Appareil (100) pour estimer une condition de route, comprenant
une interface d'entrée (110) configurée pour recevoir des données d'entrée (112) dérivées d'un ou plusieurs capteurs, chaque capteur étant configuré pour mesurer une quantité physique liée à un véhicule (200) ou à son environnement, les données d'entrée (112) présentant un état de conduite actuel du véhicule ;
un processeur d'apprentissage automatique (120) configuré pour mapper les données d'entrée (112) à une condition de route estimée (122) ;
un processeur de validation (130) configuré pour valider la condition de route estimée (122) sur la base d'une mesure (132) de la condition de route obtenue à l'état de conduite actuel du véhicule ; et
**caractérisé par** le fait de comprendre en outre une
circuiterie de communication configurée pour communiquer des informations de validation concernant un résultat de la validation de la condition de route estimée (122) entre l'appareil (100) et une entité externe (170).

2. Appareil (100) selon la revendication 1, comprenant une circuiterie de mesure (140) configurée pour effectuer la mesure simultanément ou ultérieurement à la détermination de la condition de route estimée par le processeur d'apprentissage automatique (120).

3. Appareil (100) selon la revendication 1 ou 2, comprenant une circuiterie de mesure (140) configurée pour effectuer la mesure pendant l'état de conduite actuel du véhicule et/ou lors d'un changement soudain de l'état de conduite actuel du véhicule initié par le conducteur du véhicule.

4. Appareil (100) selon la revendication 3, la circuiterie de mesure (140) comprenant au moins un capteur pour déterminer des données de vérité de terrain liées à une adhérence entre le véhicule (200) et une route.

5. Appareil (100) selon la revendication 3 ou 4, la circuiterie de mesure (140) comprenant au moins l'un d'un système de freinage antiblocage, d'un capteur ABS, d'un capteur de système de commande de traction (TCS) et d'un capteur d'attelage à sellette pour déterminer des données de vérité de terrain liées à la condition de route.

6. Appareil (100) selon l'une des revendications précédentes, le processeur de validation (130) étant configuré pour valider la condition de route estimée sur la base d'une comparaison d'un résultat de la mesure (132) avec la condition de route estimée (122).

7. Appareil (100) selon l'une des revendications précédentes, le processeur de validation (130) étant configuré pour signaler, sur la base d'une comparaison d'un résultat de la mesure (132) avec la condition de route estimée (122), une mesure de précision de la condition de route estimée (122).

8. Appareil (100) selon l'une des revendications précédentes, le processeur de validation (130) étant configuré pour signaler une invalidation de la condition de route estimée (122) si une différence entre un résultat de la mesure (132) et la condition de route estimée (122) dépasse un seuil prédéfini.

9. Appareil (100) selon l'une des revendications précédentes, comprenant une circuiterie de communication configurée pour recevoir, pour un tuple d'un état de conduite présenté et d'une condition de route estimée (122), des informations de mise à jour (175) d'une entité externe (170), les informations de mise à jour (175) indiquant que la condition de route estimée a été précédemment validée ou invalidée par une mesure précédente liée à l'état de conduite présenté, la mesure précédente ayant été effectuée par le véhicule ou au moins un autre véhicule d'une flotte de véhicules.

10. Appareil (100) selon la revendication 9, le processeur de validation (130) étant configuré pour valider ou invalider la condition de route estimée (122) sur la base des informations de mise à jour (175).

11. Appareil (100) selon l'une des revendications précédentes, le processeur de validation (130) étant configuré pour transmettre la condition de route estimée (122) à une unité de commande (150) du véhicule uniquement si la condition de route estimée a été validée.

12. Appareil (100) selon l'une des revendications précédentes, la condition de route estimée (122) comprenant un niveau d'adhérence estimé indicatif d'une adhérence entre le véhicule et une route.

13. Serveur cloud (170), comprenant
une interface de communication (171) configurée pour
recevoir, d'un ou plusieurs véhicules (200-1 ; 200-2 ; 200-3) d'une flotte de véhicules, différentes unités d'informations de validation liées à différentes instances d'un même tuple d'un état de conduite présenté et d'une condition de route estimée généré par un processeur d'apprentissage automatique (120) ; et
une circuiterie de traitement (174) configurée pour
déterminer un attribut de validité du tuple de l'état de conduite présenté et de la condition de route estimée sur la base des différentes unités d'informations de validation.

14. Serveur cloud (170) selon la revendication 13, l'interface de communication (171) étant configurée pour
recevoir, d'un premier véhicule d'une flotte de véhicules, de premières informations de validation (172-1) liées à un tuple d'un état de conduite présenté et d'une condition de route estimée, et
recevoir, du premier ou d'un deuxième véhicule de la flotte de véhicules, de deuxièmes informations de validation (172-2) liées au même tuple de l'état de conduite présenté et de la condition de route estimée ; et
la circuiterie de traitement (174) étant configurée pour
comparer les premières et les deuxièmes informations de validation ; et
invalider la condition de route estimée pour ledit état de conduite présenté pour tous les véhicules de la flotte de véhicules si au moins l'une des premières et deuxièmes informations de validation indique une condition de route estimée invalidée.

15. Procédé (400) de validation d'une estimation de la condition de route basée sur l'apprentissage automatique, le procédé comprenant le fait de
dériver (410) des données de caractéristique d'entrée d'un ou plusieurs capteurs, chaque capteur mesurant une quantité physique liée à un véhicule (200) ou à son environnement, les données de caractéristique d'entrée (112) présentant un état de conduite actuel du véhicule ;
estimer (420), en utilisant un modèle d'apprentissage automatique (120), une condition de route (122) sur la base des données de caractéristique d'entrée ;
valider (430) la condition de route estimée (122) sur la base d'une mesure (132) de la condition de route obtenue à l'état de conduite actuel du véhicule ; et
**caractérisé par** le fait de comprendre en outre le fait de
communiquer des informations de validation concernant un résultat de la validation de la condition de route estimée (122) entre le véhicule (200) et une entité externe (170).
